(19) Europäisches Patentamt
European Patent Office
Office européen des brevets

(11) EP 3 284 353 B1

(12) **EUROPEAN PATENT SPECIFICATION**

(45) Date of publication and mention of the grant of the patent:
**07.04.2021 Bulletin 2021/14**

(21) Application number: **17738512.7**

(22) Date of filing: **13.01.2017**

(51) Int Cl.:
***A23L 27/00*** *(2016.01)* ***A23L 27/20*** *(2016.01)*
***A23L 27/21*** *(2016.01)* ***A23L 27/50*** *(2016.01)*

(86) International application number:
**PCT/JP2017/000922**

(87) International publication number:
**WO 2017/122760 (20.07.2017 Gazette 2017/29)**

(54) **PONZU-VINEGAR SOY SAUCE SEASONING**

PONZU-ESSIG-SOJASOSSEN-GEWÜRZ

ASSAISONNEMENT DE SAUCE SOJA À VINAIGRE DE PONZU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2016 JP 2016005478**

(43) Date of publication of application:
**21.02.2018 Bulletin 2018/08**

(73) Proprietors:
- **Mizkan Holdings Co., Ltd.**
  **Handa-shi, Aichi 475-8585 (JP)**
- **Mizkan Co., Ltd.**
  **Handa-shi, Aichi 475-8585 (JP)**

(72) Inventor: **TSURUMIZU, Ryoji**
**Handa-shi**
**Aichi 475-8585 (JP)**

(74) Representative: **Mewburn Ellis LLP**
**Aurora Building**
**Counterslip**
**Bristol BS1 6BX (GB)**

(56) References cited:
**JP-A- H05 284 953** **JP-A- 2004 049 104**
**JP-A- 2009 142 194** **JP-A- 2012 105 591**
**JP-A- 2012 187 007** **JP-A- 2014 147 366**
**JP-A- 2015 144 600** **US-A- 3 294 550**

- **DATABASE WPI Week 201455 2014 Thomson Scientific, London, GB; AN 2014-P64804 XP002785010, & JP 2014 147366 A (YAMASA SHOYU KK) 21 August 2014 (2014-08-21)**
- **DATABASE GNPD [Online] MINTEL; 27 August 2015 (2015-08-27), anonymous: "Ponzu Sauce", XP055508903, retrieved from www.gnpd.com Database accession no. 3390619**
- **MOUFIDA SAIDANI TOUNSI ET AL: "Juice components and antioxidant capacity of four Tunisian Citrus varieties", JOURNAL OF THE SCIENCE OF FOOD AND AGRICULTURE, vol. 91, no. 1, 22 September 2010 (2010-09-22), pages 142-151, XP55509033, GB ISSN: 0022-5142, DOI: 10.1002/jsfa.4164**

Remarks:
The file contains technical information submitted after the application was filed and not included in this specification

EP 3 284 353 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical Field

The present invention relates to a *ponzu* soy sauce seasoning (citrus seasoned soy sauce), in which the generation of *hine-shu* during preservation or deterioration smell due to heat sterilization is suppressed, and even if the seasoning is heated, the full-bodied taste of the soy sauce is not lost but is retained.

### Background Art

*Ponzu* soy sauce comprising soy sauce and citrus juice from a citrona small citrus fruit (*yuzu, Citrus junos*) or a Japanese citrus (*sudachi, Citrus sudachi)* is a seasoning that is commonly used for a hot-pot dish, and also for grilled fish, dumplings, etc. as an alternative for soy sauce. While such *ponzu* soy sauce is characterized in that it has refreshing fragrance from citrus juice, it has been problematic in that the flavor of citrus juice is deteriorated during heat sterilization upon the production thereof, and in that *hine-shu* is generated from citrus juice and soy sauce during preservation since the *ponzu* soy sauce is often preserved at normal temperature after it is opened. Therefore, it is recommended that the *ponzu* soy sauce be used up after it is opened, or at least, be preserved under refrigeration. In addition, with regard to a container for the *ponzu* soy sauce, since the content liquid is allowed to come into contact with oxygen with high frequency after opening, a container configured to prevent the content liquid from being contacted with air has been developed. For example, a delamination container, in which an internal portion is peeled from a container having a two-layer structure so that the seasoning liquid is hardly contacted with air, has been known. According to refrigerated preservation, however, generation of *hine-shu* can be delayed to a certain extent, but in a long-term preservation period such as 1 month or more, generation of *hine-shu* cannot be completely suppressed. Moreover, a container for blocking the content liquid from oxygen after opening can suppress generation of *hine-shu,* but it cannot completely prevent deterioration due to dissolved oxygen, and further, the mechanism of the container is complicated, thereby causing high costs.

To date, as a method of suppressing deterioration of the flavor of *ponzu* soy sauce, a method of adding soup stock of kelp to *ponzu* soy sauce so as to mask unpleasant smell such as fermentation smell has been reported (Patent Literature 1). However, this report does not involve studies regarding *hine-shu* generated as a result of long-term preservation. Moreover, a method of adding a thiamine compound to *ponzu* soy sauce so as to suppress a reduction in the fruit juice feeling of citrus juice due to the long-term preservation of the *ponzu* soy sauce has been reported (Patent Literature 2). However, this publication does not describe at all *hine-shu.* Furthermore, a method of improving the flavor of soy sauce by addition of dithioether has been known (Patent Literature 3). However, the method of improving the flavor of this publication is to regain the original flavor of soy sauce obtained immediately after the production thereof to the soy sauce whose taste has been deteriorated at the processing stage, and thus, the improvement of flavor is not intended to suppress *hine-shu* generated as a result of long-term preservation. Further, since the target of flavor improvement described in Patent Literature 3 is soy sauce, and it is not *ponzu* soy sauce comprising citrus juice, the method of Patent Literature 3 does not suppress generation of *hine-shu* derived from both soy sauce and citrus juice.

On the other hand, it has been reported that a cause of photodeterioration smell generated in citrus juice beverages such as grapefruit juice would be an increase in p-cymene known as an oxidizing component belonging to terpenes specific to citrus fruits (Non-Patent Literature 1). In addition, it has been reported that p-cymene is increased over time, during the storage of an orange juice that has been treated at 100°C for 30 minutes (Non-Patent Literature 2).

JP 2014-147366 A concerns a ponzu soy sauce comprising soy sauce, vinegar and citrus fruit juice, and has the following properties (a) to (d): (a) a sodium chloride concentration of 6.0% (w/v) or less, excluding 0%; (b) a sodium/potassium ratio less than 0.8, excluding 0; (c) an acetic acid acidity of 2.5(%) or less, excluding 0; and (d) a citric acid acidity of 2.0(%) or less, excluding 0. MINTEL; August 2015, anonymous; "Ponzu Sauce", retrieved from www.gnpd.com concerns a ponzu sauce. Tounsi, Moufida Saidani et al. "Juice Components And Antioxidant Capacity Of Four Tunisian Citrus Varieties". Journal Of The Science Of Food And Agriculture, vol. 91, no. 1, 2010, pp. 142-151 concerns juice components and antioxidant capacity of four Tunisian citrus varieties *Citrus reticulata, C. lemon, C. aurantium* and *C. sinensis.* US 3294550 A concerns production of full-flavored stable essential oils.

### Citation List

#### Patent Literature

Patent Literature 1: JP 2004-49104 A

Patent Literature 2: JP 2009-142194 A
Patent Literature 3: JP 2014-083032 A

Non-Patent Literature

Non-Patent Literature 1: Research Report, 27, 65-69 (2009), Toyo College of Food Technology & Toyo Institute of Food Technology
Non-Patent Literature 2: Research Report, 21, 91-104 (1996), Toyo College of Food Technology & Toyo Institute of Food Technology

Summary of Invention

Problems to be Solved by the Invention

Accordingly, it is an object of the present invention to provide a *ponzu* soy sauce seasoning, in which the generation of *hine-shu* during preservation or deterioration smell due to heat sterilization is suppressed without using a special container.

Means for Solving the Problem

The present inventors have conducted intensive studies directed towards achieving the aforementioned object. As a result, the inventors have found that the content of p-cymene and the contents of potassium ions, sodium ions, acetic acid, and citric acid in a *ponzu* soy sauce seasoning are adjusted to predetermined ranges, so that the generation of *hine-shu* during preservation or deterioration smell due to heat sterilization can be suppressed and also the effect of retaining the full-bodied taste of the soy sauce without losing it can be obtained, even if the seasoning is heated, thereby completing the present invention. To date, p-cymene has been known as a negative odor, and thus, this has been a component that is not motivated to be actively added to seasonings and the like. In addition, the findings that *hine-shu* generated during preservation of a seasoning or deterioration smell generated upon heat sterilization is suppressed by addition of p-cymene have been totally unknown.
Specifically, the present invention includes the following inventions.

(1) A *ponzu* soy sauce seasoning comprising citrus juice, vinegar, and soy sauce, wherein the contents of components (a) to (e) in the seasoning are in the following ranges:

(a) p-cymene: 0.001 to 0.5 ppm,
(b) potassium ions: 0.02% to 5.0% by mass,
(c) sodium ions: 0.5% to 4.0% by mass,
(d) acetic acid: 0.5% to 3.5% by mass, and
(e) citric acid: 0.2% to 4.5% by mass, and the mass ratio (K/N) between the content of potassium ions and the content of sodium ions is 0.03 to 0.5.

(2) The *ponzu* soy sauce seasoning according to the above (1), wherein the total content of potassium ions and sodium ions is 0.5% to 6.0% by mass.
(3) The *ponzu* soy sauce seasoning according to the above (1) or (2), wherein the concentration of dissociated acetic acid is 0.002% to 1.0% by mass.
(4) The *ponzu* soy sauce seasoning according to any one of the above (1) to (3), wherein the mass ratio (citric acid/acetic acid) between the content of citric acid and the content of acetic acid is 0.2 to 10.0.
(5) The *ponzu* soy sauce seasoning according to any one of the above (1) to (4), wherein the content of leucine is 0.03% to 0.5% by mass.
(6) The *ponzu* soy sauce seasoning according to any one of the above (1) to (5), which has a pH value of 1.9 to 4.5.
(7) A method for suppressing the *hine-shu* of a *ponzu* soy sauce seasoning comprising citrus juice, vinegar, and soy sauce, which comprises adjusting the following components (a) to (e) in the *ponzu* soy sauce seasoning to the following ranges:

(a) p-cymene: 0.001 to 0.5 ppm,
(b) potassium ions: 0.02% to 5.0% by mass,

(c) sodium ions: 0.5% to 4.0% by mass,
(d) acetic acid: 0.5% to 3.5% by mass, and
(e) citric acid: 0.2% to 4.5% by mass,

wherein the term "*hine-shu*" is used to mean a unique odor generated as a result of the oxidation reaction of components comprised in citrus juice or soy sauce during the preservation of the *ponzu* soy sauce seasoning, this odor being one type of off-flavor, which is different from the deterioration smell of soy sauce alone or the deterioration smell of citrus juice alone, and it is also different from the flavor of p-cymene itself; it is a flavor such as a mixture of the oxidized odor of oil/fat derived from soy sauce and the oxidized odor of oil/fat derived from citrus juice, wherein the two oxidized odors each have different flavor characteristics; it is significantly generated under preservation conditions from normal temperature to high temperature; it is an unpleasant smell generated when maturation has excessively progressed, and it is also considered to be an unfavorable "mature flavor".

Effects of the Invention

According to the present invention, provided is a *ponzu* soy sauce seasoning, in which the generation of *hine-shu* during the preservation of the seasoning, which is at the stage of distribution, sales, or offering (in particular, in the case of normal temperature distribution products, or products on display sales or provided in restaurants, etc. at normal temperature to high temperature), or after uncapping the products, and also, the generation of deterioration smell due to heat sterilization, are suppressed. The *ponzu* soy sauce seasoning of the present invention is useful not only for common households, but also in industrial use in which the filled amount is large and thus, it takes a long time to use up the content liquid. Moreover, the *ponzu* soy sauce seasoning of the present invention can be preserved for a long period of time in a simple container that is not equipped with an air-blocking mechanism, or in a container, for a part or all of which a high oxygen-permeable resin is used, or even in a distribution and/or sales form without involving refrigerated preservation.

Embodiments for carrying out the Invention

Hereafter, the present invention will be described in detail.

The *ponzu* soy sauce seasoning of the present invention (hereinafter referred to as "the seasoning of the present invention") is a seasoning comprising, as main raw materials, citrus juice, vinegar, and soy sauce, which is characterized in that the contents of components (a) to (e) in the seasoning are in the following ranges:

(a) p-cymene: 0.001 to 0.5 ppm,
(b) potassium ions: 0.02% to 5.0% by mass,
(c) sodium ions: 0.5% to 4.0% by mass,
(d) acetic acid: 0.5% to 3.5% by mass, and
(e) citric acid: 0.2% to 4.5% by mass, and the mass ratio (K/N) between the content of potassium ions and the content of sodium ions is 0.03 to 0.5.

The seasoning of the present invention is not particularly limited, as long as it comprises citrus juice, vinegar, and soy sauce, and the contents of the above-described components (a) to (e) in the seasoning are in the above-described predetermined ranges. Examples of the present seasoning include *ponzu* soy sauce, seasoning vinegar, soups [*tentsuyu* (tempura dipping soup), *mentsuyu* (noodle soup base), *nabetsuyu* (hot pot soup), etc.], and dressing. In particular, since *hine-shu* is volatilized at a high temperature and thus is noticeable, the seasoning of the present invention is suitably used, when food materials are eaten in a high temperature state, and also when food materials are cooked by heating. For example, the seasoning of the present invention is particularly useful, when the present seasoning is used in such a manner that the seasoning is poured on hot food materials such as fried foods or grilled foods (steak, grilled fish, dumplings, etc.), or hot food materials are immersed in the present seasoning, such as in the case of *shabu-shabu* or boiled tofu, or the seasoning is heated together with food materials such as in the case of fried vegetables or a hot-pot dish, or the seasoning is mixed with hot food materials, such as pasta sauce.

The "citrus juice" used in the seasoning of the present invention is not particularly limited, as long as it is the juice of fruits generally called "citrus." Examples of such citrus juice that can be used herein include *yuzu* juice, Mikan (Satsuma, Citrus unshiu) juice, kumquat juice, *kabosu* juice, *sudachi* juice, lemon juice, bitter orange juice, bitter summer orange juice, Citrus hassaku juice, Citrus yuko juice, Ponkan orange juice, mandarin orange juice, flat lemon juice, pomelo juice, Citrus grandis juice, lime juice, grapefruit juice, Citrus reticulata Siranui juice, Citrus tamurana juice, and navel orange juice. In particular, since deterioration of the flavor of *yuzu* juice, *kabosu* juice, *sudachi* juice, lemon juice, bitter orange juice and the like is very fast, these citrus juices are preferably used to obtain the advantageous effects of

the present invention. These citrus juices may be used alone, or may also be used in combination of two or more types. If two or more types of citrus juices are used in combination, deterioration smell significantly appears, and thus, the present invention is more useful to suppress such significant deterioration smell. Herein, the term "citrus juice" broadly indicates a liquid obtained by squeezing or crushing the fruits or peels of the above-described citrus fruits. The citrus juice used in the present invention may be either a juice from which fruits and peels have been removed, or a juice in which fruits and peels still remain. However, in the case of citrus juice comprising fruits and peels, since oil components derived from the peels cause deterioration, and deterioration smell is easily generated. Accordingly, when juice comprising fruits and peels, in particular, *yuzu* juice is used, the present invention is particularly useful to suppress the aforementioned deterioration. In addition, the citrus juice used in the present invention may be either an unfrozen liquid juice, or a frozen solidified citrus juice. The content of citrus juice in the seasoning of the present invention may be adjusted, as appropriate, depending on the content of citric acid and the type of the citrus juice, which are necessary for the seasoning of the present invention. For example, the content of the citrus juice is preferably 0.3% to 20.0% by mass, and more preferably 0.5% to 15.0% by mass.

The "vinegar" used in the seasoning of the present invention means a brewed vinegar produced from raw materials including grains such as rice or wheat, or fruit juice. Examples of the vinegar that can be used herein include rice vinegar, grain vinegar (brown rice vinegar, black vinegar, sake lees vinegar, malt vinegar, adlay vinegar, soybean vinegar, etc.), fruit vinegar (apple vinegar, grape vinegar, lemon vinegar, *kabosu* vinegar, *ume* vinegar, wine vinegar, balsamico vinegar, etc.), alcoholic vinegar, and Chinese vinegar. In particular, grain vinegar, alcoholic vinegar and the like are preferable because these vinegars have fresh flavor and also have good compatibility with food materials. These vinegars may be used alone, or may also be used in combination of two or more types. The acidity of these vinegars is approximately 1.5% to 20.0%. The content of vinegar in the seasoning of the present invention may be adjusted, as appropriate, depending on the content of acetic acid which are necessary for the seasoning of the present invention and the type of the vinegar. For example, the content of the vinegar is preferably 2.0% to 35.0% by mass, more preferably 5.0% to 30.0% by mass, and most preferably 7.0% to 25.0% by mass.

The "soy sauce" used in the seasoning of the present invention is not particularly limited, as long as it is generally called as "soy sauce." Examples of the soy sauce include brewed soy sauce (*koikuchi* (dark-colored) soy sauce, *usukuchi* (light-colored) soy sauce, *tamari* (rich-tasting) soy sauce, *saishikomi* (refermented) soy sauce, white soy sauce, etc.), reduced salt soy sauce or low-salt soy sauce, in which the content of salts is reduced in comparison to in the case of ordinary brewed soy sauce, amino acid-mixed soy sauce, kelp soy sauce, *Tosa* soy sauce, *sashimi* soy sauce, and fish soy sauce. In the present invention, from the viewpoint of compatibility with citrus juice, *koikuchi* (dark-colored) soy sauce is preferable. The content of soy sauce in the seasoning of the present invention may be adjusted, as appropriate, depending on the contents of sodium ions and potassium ions and the type or pH of the soy sauce, which are necessary for the seasoning of the present invention. For example, the content of the soy sauce in the present seasoning is preferably 2.0% to 50.0% by mass, and more preferably 5.0% to 45.0% by mass.

In addition to citrus juice, vinegar and soy sauce used as main raw materials, the seasoning of the present invention may also comprise general raw materials or additives that are commonly used for seasonings, in a range that does not impair the advantageous effects of the present invention. Examples of such raw materials or additives include salts, *miso* (soybean paste), *mirin* (sweet cooking rice wine), *sake* (Japanese alcohol), oils, sesame, flavoring vegetables, sugars (sugar, fructose, glucose, starch syrup, isomerized glucose syrup, etc.), sweeteners (stevia, aspartame, acesulfame K, sucralose, etc.), thickening stabilizers (soybean polysaccharides, pectin, carrageenan, gellan gum, xanthan gum, guar gum, etc.), antioxidants (tocopherol, cysteine hydrochloride, etc.), flavoring materials (soup stock from dried and smoked bonito, kelp soup stock, kelp extract, meat extract, poultry extract, seafood extract, fruit juice, etc.), acidulants (citric acid, lactic acid, malic acid, tartaric acid, etc.), *umami* seasoning (protein hydrolysate, yeast extract, etc.), amino acid-based seasonings (glycine, alanine, sodium glutamate, etc.), nucleic acid-based seasonings (sodium inosinate, sodium guanylate, etc.), organic acid-based seasonings (sodium succinate, etc.), cooking spices such as spices or herbs, pH adjusters, antioxidants, coloring agents, and flavors.

The shape of the seasoning of the present invention may be any one of a liquid, a solid, powders, a paste, gel, mousse, and spray. Moreover, the seasoning of the present invention may be any one of a concentrated type seasoning, which is used by being added to water or broth upon cooling and being adjusted to an optimal concentration, a straight type seasoning, which is directly used upon cooling, and a powder type seasoning, which is used in the form of powders for food products. The powder type seasoning may satisfy the constituent features of the present invention in the form of powders, or may satisfy the constituent features of the present invention in the form of powders that have been diluted with a liquid. In particular, since the straight type seasoning tends to have fast deterioration of the flavor, it is preferably used to obtain the advantageous effects of the present invention.

Hereafter, the components (a) to (e) comprised in the seasoning of the present invention will be described.

(Component (a): p-cymene)

In the seasoning of the present invention, "p-cymene (common name: 4-isopropyltoluene)" is a known substance, which has a molecular formula $C_{10}H_{14}$ (molecular weight: 134.22) and is represented by the following structural formula. In addition, CAS registry number is 99-87-6.

[Formula 1]

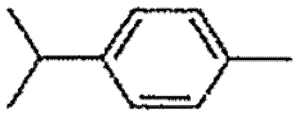

In the seasoning of the present invention, p-cymene means p-cymene derived from raw materials or additives, and the content of p-cymene indicates the total concentration of p-cymene derived from citrus juice and p-cymene added separately.

In the seasoning of the present invention, the content of p-cymene is 0.001 to 0.5 ppm, preferably 0.001 to 0.1 ppm, and most preferably 0.001 to 0.05 ppm. By setting the content of p-cymene in the above-described range, the effect of significantly suppressing *hine-shu* can be obtained. If the content of p-cymene is higher than 4.0 ppm, the masking effect becomes too high, and thus, even preferred fresh feeling of citrus is undesirably masked. The term "fresh feeling of citrus" is used in the present invention to mean fresh taste and flavor that are specific to citrus fruits. On the other hand, if the content of p-cymene is lower than 0.0006 ppm, the effect of suppressing *hine-shu* cannot be obtained, and deterioration of the flavor of the entire seasoning is unfavorably promoted. The content of p-cymene can be measured by the following GC/MS analysis method.

First, special-grade dichloromethane is fully mixed in an equal amount with a sample (which has been fully homogenized with a suitable amount of water or the like, when it has been a solid), and components are then extracted from the sample. The obtained extract is dehydrated with sodium sulfate, and is then injected into a gas chromatographic analysis device according to a splitless injection method, followed by performing an analysis.

The type of such a gas chromatographic analysis device is not particularly limited, as long as it can be connected with a capillary column and has the performance of a common gas chromatographic analysis device. For example, HP6890 Series GC System (manufactured by Agilent) can be used as a gas chromatographic analysis device. In addition, the type of the capillary column is not particularly limited, as long as it can be used in a common analysis. The capillary column may preferably comprise dimethylpolysiloxane, diphenyl, cyanopropylphenyl, polyethylene glycol, terephthalic acid-modified polyethylene glycol, etc. in the inner membrane thereof. For example, TC-WAX (inner diameter: 0.25 mm, length: 60 m, membrane thickness: 0.25 μm) (manufactured by GL-Sciences) can be used. The temperature of the sample injection port is set at 200°C, and helium gas is used as a mobile phase. With regard to a temperature-rise program, the sample is retained at 50°C for 5 minutes, and thereafter, the temperature is increased to 230°C at a rate of 5°C/min, and it is then retained at 230°C for 20 minutes. After that, the sample is subjected to a mass spectrometer to obtain a molecular weight, followed by confirmation and quantification using p-cymene-related ions.

The type of a mass spectrometer (MS) that can be used herein is not particularly limited, as long as it has common mass spectrum analysis performance. As a mass spectrometric device, a quadrupole, ion trap, time-of-flight, or tandem mass spectrometer is preferable, and for example, 5973 Mass Selective Detector (manufactured by Agilent) can be used. In addition, as a method of ionizing a sample, a common ionization method can be adopted. Examples of a preferred ionization method include an electron ionization method (EI), an electrospray ionization method (ESI), a matrix-assisted laser desorption/ionization method (MALDI), a chemical ionization method (CI), and a field desorption method (FD). For example, the analysis can be carried out according to the electron ionization method under conditions of EI+ and a fragmentator voltage of 70 V. Moreover, the mass spectrometric analysis can also be carried out under conditions of a scanning mode, a target ion size of 119, and a confirmation ion size of 134, 91.

As a quantitative marker, a preparation of p-cymene (manufactured by Tokyo Chemical Industry Co., Ltd.), which has been diluted with special-grade dichloromethane to 10 ppm, is used, and this marker is subjected to the analysis under the above-described chromatography conditions. In the obtained chromatographic pattern, a peak around a retention time of 20.003 minutes is determined to be a peak of p-cymene, and components in the sample can be then quantified by comparing the peak area of the target ions of the sample with that of the preparation.

(Component (b): potassium ions)

In the seasoning of the present invention, potassium ions mean potassium ions derived from raw materials or

additives, and the content of potassium ions indicates the total concentration of potassium ions derived from citrus juice and soy sauce and potassium ions derived from potassium salts added separately. The potassium salts are not particularly limited, as long as they are potassium salts that can be applied to foods and beverages. Examples of the potassium salts include potassium chloride, potassium phosphate, potassium hydrogen phosphate, potassium metaphosphate, potassium glutamate, and potassium tartrate. These potassium salts can be added as food materials such as kelp soup stock. However, it is more preferable that the above-described potassium salts are added to the seasoning of the present invention in the state of a high-purity food additive, since components other than the potassium salts are not added to the seasoning, and thus, the concentration of the potassium salts can be easily adjusted. The content of potassium ions can be measured using an atomic absorption photometer.

The content of potassium ions in the seasoning of the present invention is 0.02% to 5.0% by mass, preferably 0.04% to 5.0% by mass, more preferably 0.1% to 3.5% by mass, and most preferably 0.2% to 3.0% by mass. When the content of potassium ions is set in the above-described range, the full-bodied taste of soy sauce is preferably not lost but is retained, although it is heated. If the content of potassium ions is higher than 5.0% by mass, potassium taste such as bitter taste or irritant taste unfavorably appears in the seasoning. On the other hand, if the content of potassium ions is lower than 0.02% by mass, the seasoning unfavorably lacks punch (lacks impact or sharpness).

(Component (c): sodium ions)

In the seasoning of the present invention, sodium ions mean sodium ions derived from raw materials or additives, and the content of sodium ions indicates the total concentration of sodium ions derived from soy sauce and sodium ions derived from sodium salts added separately. The sodium salts are not particularly limited, as long as they are sodium salts that can be applied to foods and beverages. Examples of the sodium ions include sodium chloride, sodium carbonate, sodium hydrogen carbonate, sodium phosphate, sodium succinate, sodium malate, sodium citrate, sodium gluconate, sodium tartrate, sodium benzoate, sodium glutamate, sodium aspartate, sodium alginate, sodium inosinate, and sodium guanylate. These sodium salts are added to the seasoning of the present invention in the form of table salt, a flavoring material (soup stock from dried and smoked bonito, kelp soup stock, kelp extract, meat extract, poultry extract, seafood extract, etc.), an amino acid-based seasoning (sodium glutamate, etc.), a nucleic acid-based seasoning (sodium inosinate, sodium guanylate, etc.), or an organic acid-based seasoning (sodium succinate, etc.). The content of sodium ions can be measured using an atomic absorption photometer.

The content of sodium ions in the seasoning of the present invention is 0.5% to 4.0% by mass, preferably 1.0% to 4.0% by mass, more preferably 1.0% to 3.6% by mass, and most preferably 1.0% to 2.0% by mass. When the content of sodium ions is set in the above-described range, the seasoning is preferably highly blended with food materials. If the content of sodium ions is higher than 4.0% by mass, the sweet taste of the seasoning unfavorably seems to be weak. On the other hand, if the content of sodium ions is lower than 0.5% by mass, deterioration of the flavor of the entire seasoning is unfavorably promoted.

(Component (d): acetic acid)

In the seasoning of the present invention, acetic acid is composed of acetic acid molecules ($CH_3COOH$) and acetic acid ions ($CH_3COO^-$) derived from raw materials or additives, and the content of acetic acid indicates the total concentration of acetic acid molecules and acetic acid ions. In particular, the present acetic acid is preferably acetic acid derived from vinegar as a food product. The content of acetic acid in the seasoning of the present invention is 0.5% to 3.5% by mass, preferably 0.6% to 3.0% by mass, and more preferably 0.7% to 2.5% by mass. When the content of acetic acid is set in the above-described range, the flavor characteristic for *ponzu* soy sauce is preferably increased. If the content of acetic acid is higher than 3.5% by mass, acidic taste or acetic acid odor is likely to be stronger than citrus odor, and as a result, the balance of the flavor of the entire seasoning is unfavorably collapsed. On the other hand, if the content of acetic acid is lower than 0.5%, the taste of the seasoning cannot become a refreshing and light taste, and thus, it is not preferable.

(Component (e): citric acid)

In the seasoning of the present invention, citric acid means citric acid molecules and citric acid ions derived from raw materials or additives, and the content of citric acid indicates the total concentration of these molecules and ions. Citric acid is generally added as an acidulant or a pH adjuster.

The content of citric acid in the seasoning of the present invention is 0.2% to 4.5% by mass, preferably 0.37% to 3.6% by mass, and more preferably 0.4% to 1.5% by mass. When the content of citric acid is set in the above-described range, the quality of citrus juice taste is preferably improved. If the content of citric acid is higher than 4.5% by mass, the balance of the taste of the entire seasoning is unfavorably collapsed. On the other hand, if the content of citric acid

is lower than 0.2% by mass, citrus juice unfavorably tends to be deteriorated.

(Total content of potassium ions and sodium ions and ratio thereof)

In the seasoning of the present invention, in order to obtain the effect of improving the comprehensive flavor of citrus, the total content of potassium ions and sodium ions and the ratio between potassium ions and sodium ions are preferably adjusted to the predetermined ranges. Specifically, the total content of potassium ions and sodium ions is 0.5% to 6.0% by mass, preferably 1.0% to 6.0% by mass, and more preferably 1.0 to 4.0% by mass. Moreover, in addition to adjusting the total content of potassium ions and sodium ions to the above-described concentration, by adjusting the mass ratio (K/N) between the content of potassium ions and the content of sodium ions, the effect of significantly suppressing potassium taste can be obtained. Specifically, the mass ratio (K/N) between the content of potassium ions and the content of sodium ions is 0.03 to 0.5, preferably 0.1 to 0.5, and more preferably 0.1 to 0.3.

(Concentration of dissociated acetic acid)

Regarding acetic acid molecules, it has been known that dissociated acetic acid molecules and undissociated acetic acid molecules create a resonance state in an aqueous solution. That is to say, when the concentration of dissociated acetic acid is defined as $[A^-]$, the concentration of protons is defined as $[H^+]$, and the concentration of undissociated acetic acid is defined as [AH], the two types of acetic acid molecules coexist in an equilibrated state as shown in the following formula.

$$[AH] \Leftrightarrow [H^+] + [A^-] \qquad \text{(Formula 1)}$$

On the other hand, the concentration of dissociated acetic acid $[A^-]$ can be obtained from pH and acetic acid concentration according to the following calculation formula.

$$pH = 4.76 + \log_{10} [A^-] / [AH] \qquad \text{(Formula 2)}$$

In the seasoning of the present invention, in order to obtain the effect of slowing a reduction in the flavor of the entire seasoning, the concentration of dissociated acetic acid $[A^-]$ is preferably adjusted to a predetermined range. Specifically, it is desirable to adjust the concentration of acetic acid and pH, so that the concentration of dissociated acetic acid can be 0.002% to 1.0% by mass, preferably 0.005% to 0.9% by mass, more preferably 0.01 to 0.8% by mass, further preferably 0.02% to 0.75% by mass, and most preferably 0.05% to 0.7% by mass. From the viewpoint of achieving the balance between flavor and taste and the above-described concentration of dissociated acetic acid, the pH of the seasoning of the present invention is pH 1.9 to 4.5, preferably pH 2.5 to 4.5, and more preferably pH 3.0 to 4.2.

(Ratio between content of citric acid and content of acetic acid)

In the seasoning of the present invention, in order to obtain the effect of improving the comprehensive flavor of citrus, the mass ratio between the content of citric acid and the content of acetic acid (citric acid/acetic acid) is preferably adjusted to a predetermined range. Specifically, citric acid/acetic acid is 0.2 to 10.0, preferably 0.3 to 9.0, more preferably 0.4 to 8.2, further preferably 0.5 to 7.5, and most preferably 1.0 to 6.5. If the citric acid/acetic acid is lower than 0.2, the acidic odor of acetic acid is unfavorably increased during heating. On the other hand, if the citric acid/acetic acid is higher than 10.0, the astringent taste of citric acid unfavorably becomes too strong upon eating and drinking.

(Content of leucine)

In the seasoning of the present invention, leucine means leucine derived from raw materials or additives, and the content of leucine indicates the total concentration of leucine derived from soy sauce and leucine added separately. When leucine is added, separately, such leucine is generally added as an amino acid-based seasoning.

In the seasoning of the present invention, in order to enhance the flavor of *ponzu* soy sauce seasoning, the content of leucine is preferably adjusted to a predetermined range. Specifically, the content of leucine is 0.03% to 0.5% by mass, and preferably 0.04% to 0.21% by mass. If the content of leucine is smaller than 0.03% by mass, the flavor of the *ponzu* soy sauce seasoning is not sufficiently exhibited, and thus, it is not preferable. On the other hand, if the content of leucine is larger than 0.50% by mass, bitter taste derived from leucine unfavorably appears in the seasoning. The content of leucine can be measured using a commercially available amino acid analyzing device.

The seasoning of the present invention does not generate or hardly generates "*hine-shu"* during the preservation thereof. Herein, the term "preservation" includes both the preservation at distribution and/or sales stages and the preservation after opening. In addition, the term "*hine-shu*" is used herein to mean a unique odor generated as a result of the oxidation reaction of components comprised in citrus juice or soy sauce during the preservation of the *ponzu* soy sauce seasoning, and this odor is one type of off-flavor. However, this "*hine-shu*" is different from the deterioration smell of soy sauce alone or the deterioration smell of citrus juice alone, and it is also different from the flavor of p-cymene itself. The "*hine-shu*" is a flavor such as a mixture of the oxidized odor of oil/fat derived from soy sauce and the oxidized odor of oil/fat derived from citrus juice, wherein the two oxidized odor have each different flavor characteristics. The mechanism of generation of the "*hine-shu*" is similar to that of "*hineka*" of Japanese sake, and the "*hine-shu*" is significantly generated under preservation conditions from normal temperature to high temperature. The "*hine-shu*" or "*hineka*" is unpleasant smell generated when maturation has excessively progressed, and it is also considered to be unfavorable "mature flavor."

Moreover, the seasoning of the present invention does not generate or hardly generates deterioration smell due to heat sterilization. Herein, the "deterioration smell due to heat sterilization" is generated by heating in a short time, and thus, the deterioration smell due to heat sterilization is different from the "*hine-shu*" generated due to long-term preservation, in terms of the generation mechanism. The smell quality of this deterioration smell due to heat sterilization is like a smell generated as a result of the loss of the fresh feeling of soy sauce or citrus. When the seasoning of the present invention is subjected to heat sterilization, an industrially commonly used sterilization method can be applied. Specific example of such a sterilization method include a method of using a heat exchanger such as a jacket tank, a coil tank or a plate heater, a method of mixing steam, and retort sterilization performed under high temperature and high pressure conditions. Examples of conditions for the heat sterilization include sterilization at a temperature of 65°C to 95°C, preferably 70°C to 85°C, and for 1 second to 5 minutes, preferably 30 seconds to 2 minutes. The time for heat sterilization means a time in which a sample is held at a predetermined temperature or higher, after the sample has reached the predetermined temperature.

The seasoning of the present invention is a *ponzu* soy sauce seasoning, in which the "full-bodied taste" of soy sauce can be strongly felt after heating. The term "full-bodied taste" is used herein to mean a taste in which richness, mellowness and swelling are felt, and this full-bodied taste is similar to the "full-bodied taste" of wine.

The "full-bodied taste" of soy sauce in the *ponzu* soy sauce seasoning is easily lost by heating. As such, in order to obtain a *ponzu* soy sauce seasoning having such "full-bodied taste," it is necessary to apply a production method that does not comprise a sterilization step such as aseptic filling, and thus, it has been industrially inconvenient. According to the present invention, the "full-bodied taste" of soy sauce is not lost but is retained even in a *ponzu* soy sauce seasoning that is subjected to a sterilization step, and thus, it is preferable.

All types of containers can be used as containers that are to be filled with the seasoning of the present invention. For example, there can be used containers in which the content *ponzu* soy sauce seasoning liquid is easily deteriorated, such as a container for preserving at normal temperature a long-life product having an expiration date longer than 4 months after production, a container, for a part or the entire of which a resin is used, a non-one-time-use container, the opening portion of which is hermetically sealed after opening and it can be used over several times, or a resealable container having a mechanism such as a resealable cap or stopper to such an extent that the content liquid does not leaked out.

Also, the method of preserving the seasoning of the present invention is not limited. It may be either normal temperature preservation or refrigerated preservation. In particular, even if the seasoning of the present invention is provided in the form of a dry grocery product that is distributed and/or preserved at normal temperature, deterioration of the content liquid is not promoted.

The seasoning of the present invention may be produced according to the method for producing ordinary *ponzu* soy sauce, with the exceptions that the above-described raw materials and additives are used, and that the seasoning is allowed to comprise the above-described specific components in predetermined ranges. For example, among raw materials, solid raw materials are added to a liquid raw material such as water or vinegar, and the solid raw materials are then stirred and mixed therein. Thereafter, remaining liquid raw materials are added to the mixture, and the solid raw materials are dissolved in the liquid raw materials, while mixing them with a mixer. Thereafter, the obtained mixture is subjected to a heat sterilization treatment, and the reaction mixture is then cooled. The resultant is filled into a container so as to produce the seasoning of the present invention. When the seasoning of the present invention is a dry grocery product, in order to prevent microorganism contamination in a container, the filling of the present seasoning into a container is carried out according to methods, such as aseptic filling in which a container is converted to a sterilized state and a sterilized content liquid is filled therein, hot pack filling in which a content liquid after completion of heat sterilization is filled into a container under high temperature conditions and microorganisms in the container are controlled by the heat from the content liquid, or sterilization after filling, in which a container filled with a content liquid is heated with a pasteurizer or a retort oven, so that microorganisms in the container are controlled. In particular, even if a high-temperature content liquid is filled into a container, like hot pack filling, no deterioration smell is generated.

Examples

Hereinafter, the present invention will be more specifically described in the following examples. However, these examples are not intended to limit the scope of the present invention.

(Reference Example) Method of measuring components

In the following examples, p-cymene contained in a sample was measured by the following method.

First, 5 ml of a sample was collected, and then, was fully mixed with an equal amount of special-grade dichloromethane, and thereafter, components were extracted from the sample. The obtained extract was dehydrated with sodium sulfate, and 1 μl of the extract was then injected into a gas chromatographic analysis device according to a splitless injection method, followed by performing an analysis. HP6890 Series GC System (manufactured by Agilent) was used as a gas chromatographic analysis device, and TC-WAX (inner diameter: 0.25 mm, length: 60 m, membrane thickness: 0.25 μm) (manufactured by GL-Sciences) was used as a capillary column. The temperature of the sample injection port of the gas chromatographic analysis device was set at 200°C, and helium gas was used as a mobile phase. With regard to a temperature-rise program, the sample was retained at 50°C for 5 minutes, and thereafter, the temperature was increased to 230°C at a rate of 5°C/min, and it was then retained at 230°C for 20 minutes. After that, the sample was subjected to a mass spectrometer to obtain a molecular weight, followed by confirmation and quantification using p-cymene-related ions.

As a mass spectrometer (MS), 5973 Mass Selective Detector (manufactured by Agilent) was used, and the mass spectrometry was carried out under conditions of ionization of $EI^+$ and a fragmentator voltage of 70 V. The detection was carried out in a scanning mode, at a target ion size of 119, and a qualifier ion size of 134, 91, so as to carry out a mass spectrometric analysis.

As a quantitative marker, a preparation of p-cymene (manufactured by Tokyo Chemical Industry Co., Ltd.), which had been diluted with special-grade dichloromethane to 10 ppm, was used, and this marker was subjected to the analysis under the above-described chromatography conditions. In the obtained chromatographic pattern, a peak around a retention time of 20.003 minutes was determined to be a peak of p-cymene, and components in the sample were then quantified by comparing the peak area of the target ions of the sample with that of the preparation.

(Example 1) Studies regarding contents of potassium ions and sodium ions

(1) Preparation of test samples

Individual raw materials were fully mixed with one another in the prescription shown in Table 1-1, and the obtained mixture was then subjected to heat sterilization. The reaction mixture was filled into a glass bottle at 70°C, and the bottle was then hermetically sealed with a cap made of a resin. The mixture was stirred by inversion, so that the back side of the cap was allowed to come into contact with the liquid, and thereafter, it was cooled by natural cooling, so as to prepare a *ponzu* soy sauce seasoning used as a test sample. At the same time, some of the obtained test samples were preserved at 44°C for 30 days with reference to the previous report (Gyokai no Doko, "Shomikigen Encho" Gijyutsu no Kangaekata (Industry Trends, Concept of "Best-Before Date Extension" Technique), JAS Information, 503, 2-5 (2011)), so as to prepare samples capable of reproducing the degree of deterioration after preservation at 24°C for 120 days, and the thus obtained samples were subjected to a sensory test regarding "*hine-shu* during preservation." Moreover, some of mixed solutions of the above-described individual raw materials were sampled immediately after the mixing, so as to prepare samples that had not been subjected to a heat sterilization treatment, and the prepared samples were subjected to a sensory test regarding *"hine-shu* at the time of non-heating" and the "fresh feeling of citrus at the time of non-heating."

[Table 1-1]

| | Test sample | | | | | | | | | | | |
|---|---|---|---|---|---|---|---|---|---|---|---|---|
| | | No. 2 | No. 3 | No. 4 | No. 5 | No. 6 | No. 7 | No. 8 | No. 9 | No. 10 | No. 11 | No. 12 | No. 13 |
| Prescription of seasoning (mass part) | | | | | | | | | | | | | |
| Grain vinegar (acidity: 4.2%) | 0 | 67 | 67 | 67 | 67 | 67 | 67 | 67 | 200 | 200 | 250 | 200 | 200 |
| Alcoholic vinegar (acidity: 15%) | 70 | 47 | 47 | 47 | 47 | 47 | 47 | 47 | 0 | 0 | 0 | 0 | 0 |
| *Yuzu* juice | 0 | 23 | 23 | 23 | 23 | 23 | 23 | 23 | 70 | 0 | 5 | 0 | 0 |
| *Yuzu* juice preserved at 44°C for 30 days | 0 | 0 | 0 | 0 | 0 | 0 | 0 | 0 | 0 | 70 | 0 | 0 | 0 |
| *Mikan* juice | 90 | 60 | 60 | 60 | 60 | 60 | 60 | 60 | 0 | 0 | 0 | 70 | 10 |
| Soy sauce | 10 | 67 | 67 | 67 | 67 | 67 | 67 | 67 | 200 | 200 | 200 | 330 | 330 |
| Sodium glutamate | 0 | 3 | 3 | 3 | 3 | 3 | 3 | 3 | 10 | 10 | 25 | 25 | 25 |
| High fructose corn syrup | 0 | 47 | 47 | 47 | 47 | 47 | 47 | 47 | 140 | 140 | 100 | 100 | 100 |
| Table salt | 0 | 13 | 13 | 13 | 13 | 13 | 13 | 13 | 40 | 40 | 15 | 30 | 60 |
| Potassium chloride | 0 | 0 | 1.3 | 5 | 9 | 55 | 90 | 100 | 0 | 0 | 3 | 0 | 0 |
| Citric acid | 50 | 37 | 37 | 37 | 37 | 37 | 37 | 37 | 10 | 10 | 4 | 4 | 4 |
| p-Cymene | 0 | 0 | 0 | 0 | 0 | 0 | 0 | 0 | 0 | 0 | 0 | 0 | 0 |
| Water | Proper quantity | Proper quantity | Proper quantity | Proper quantity | Proper quantity | Proper quantity | Proper quantity | Proper quantity | Proper quantity | Proper quantity | Proper quantity | Proper quantity | Proper quantity |
| Total | 1000 | 1000 | 1000 | 1000 | 1000 | 1000 | 1000 | 1000 | 1000 | 1000 | 1000 | 1000 | 1000 |

(2) Sensory evaluation method

The test samples prepared in the above (1) were subjected to a sensory test, in terms of "potassium taste," the "mellowness of flavor after heating," the "full-bodied taste of soy sauce after heating," the "fresh feeling of citrus after heating/at the time of non-heating," "deterioration smell upon heat sterilization," and "*hine-shu* at the time of non-heating/during preservation." The sensory test was carried out by 10 professional panelists, and evaluation criteria for individual test items were determined as follows. It is to be noted that the score "3" in the evaluation criteria is a level at which the professional panelists are able to evaluate that the test sample is "not changed" in comparison to ordinary *ponzu* soy sauce.

(Potassium taste)

1: Strongly felt, 2: Somewhat felt, 3: Slightly felt, 4: Hardly felt, 5: Totally not felt
(Mellowness of flavor after heating)
1: Nothing, 2: Almost nothing, 3: Normal, 4: Felt, 5: Strongly felt
(Full-bodied taste of soy sauce after heating)
1: Weak, 2: Somewhat weak, 3: Normal, 4: Somewhat strong, 5: Strong
(Fresh feeling of citrus after heating/at the time of non-heating)
1: Weak, 2: Somewhat weak, 3: Normal, 4: Somewhat strong, 5: Strong
(Deterioration smell upon heat sterilization)
1: Strong, 2: Somewhat strong, 3: Normal, 4: Somewhat weak, 5: Weak
(*Hine-shu* at the time of non-heating/during preservation)
1: Strong, 2: Somewhat strong, 3: Normal, 4: Somewhat weak, 5: Weak

(3) Results

The analysis values of the seasonings and the sensory evaluation results are shown in the following Table 1-2.

[Table 1-2]

| | Test sample | | | | | | | | | | | | |
|---|---|---|---|---|---|---|---|---|---|---|---|---|---|
| | No. 1 | No. 2 | No. 3 | No. 4 | No. 5 | No. 6 | No. 7 | No. 8 | No. 9 | No. 10 | No. 11 | No. 12 | No. 13 |
| Analysis values of seasoning | | | | | | | | | | | | | |
| p-Cymene (ppm) | 0.004 | 0.004 | 0.050 | 0.050 | 0.050 | 0.050 | 0.004 | 0.004 | 0.464 | 0.200 | 0.001 | 0.010 | 0,000 |
| Limonene (ppm) | 3.631 | 3.452 | 3.789 | 3.683 | 3.762 | 3.590 | 3.759 | 3.658 | 213.210 | 202.500 | 1.611 | 0.300 | 2.190 |
| Linalool (ppm) | 0.000 | 0.000 | 0.000 | 0.000 | 0.000 | 0.000 | 0.000 | 0.000 | 4.417 | 0.800 | 0.438 | 1.200 | 0.528 |
| Acetic acid (mass %) | 1.040 | 0.967 | 1.012 | 1.120 | 1.098 | 0.998 | 0.987 | 0.954 | 0.820 | 0.812 | 1.12 | 0.859 | 0.821 |
| Citric acid (mass %) | 4.850 | 3.537 | 3.353 | 3.454 | 3.442 | 3.498 | 3.498 | 3.498 | 0.910 | 0.921 | 0.430 | 0.968 | 0.387 |
| Sodium ions (mass %) | 0.002 | 1.031 | 1.123 | 1.143 | 1.134 | 1.092 | 1.049 | 1.049 | 3.090 | 3.130 | 1.976 | 3.280 | 4.500 |
| Potassium ions (mass %) | 0.011 | 0.042 | 0.110 | 0.300 | 0.540 | 2.997 | 4.874 | 5.397 | 0.103 | 0.114 | 0.239 | 0.177 | 0.193 |
| Soy sauce amount (mass %) | 1.0 | 6.7 | 6.7 | 6.7 | 6.7 | 6.7 | 6.7 | 6.7 | 20.0 | 20.0 | 20.0 | 33.0 | 33.0 |
| Total amount of citrus juice (mass %) | 9.0 | 8.3 | 8.3 | 8.3 | 8.3 | 8.3 | 8.3 | 8.3 | 7.0 | 7.0 | 0.5 | 7.0 | 1.0 |
| K + Na (mass %) | 0.013 | 1.073 | 1.233 | 1.443 | 1.674 | 4.089 | 5.923 | 6.446 | 3.193 | 3.244 | 2.215 | 3.457 | 4.693 |
| K/Na | 5.50 | 0.04 | 0.10 | 0.26 | 0.48 | 2.74 | 4.65 | 5.14 | 0.03 | 0.04 | 0.12 | 0.05 | 0.04 |
| Citric acid/acetic acid | 4.66 | 3.66 | 3.31 | 3.08 | 3.13 | 3.51 | 3.54 | 3.67 | 1.11 | 1.13 | 0.38 | 1.13 | 0.47 |
| pH | 1.92 | 3.04 | 4.12 | 3.99 | 4.12 | 4.09 | 4.09 | 4.09 | 3.63 | 3.63 | 4.03 | 4.09 | 3.97 |
| Dissociated acetic acid (mass %) | 0.0015 | 0.0181 | 0.1886 | 0.1626 | 0.2047 | 0.1758 | 0.1738 | 0.1680 | 0.0566 | 0.0560 | 0.1758 | 0.1513 | 0.1146 |
| Leucine (mass %) | 0.00 | 0.04 | 0.09 | 0.04 | 0.05 | 0.05 | 0.04 | 0.03 | 0.10 | 0.10 | 0.12 | 0.19 | 0.22 |
| Sensory evaluation results | | | | | | | | | | | | | |
| Potassium taste | 5 | 5 | 5 | 5 | 4 | 3 | 3 | 2 | 5 | 5 | 5 | 5 | 5 |
| Mellowness of flavor after heating | 1 | 3 | 5 | 5 | 5 | 5 | 4 | 4 | 5 | 5 | 5 | 5 | 5 |
| Full bodied taste of soy sauce after heating | 1 | 4 | 4 | 5 | 5 | 5 | 4 | 3 | 4 | 4 | 5 | 4 | 4 |
| Fresh feeling of citrus at time of non-heating | 5 | 5 | 5 | 5 | 5 | 5 | 5 | 5 | 5 | 3 | 5 | 5 | 5 |
| Fresh feeling of citrus after heating | 5 | 5 | 5 | 5 | 5 | 5 | 5 | 5 | 5 | 3 | 5 | 5 | 5 |
| *Hine-shu* at time of non-heating | 5 | 5 | 5 | 5 | 5 | 5 | 5 | 5 | 5 | 5 | 5 | 5 | 5 |
| *Hine-shu* during preservation | 1 | 3 | 5 | 5 | 5 | 5 | 4 | 4 | 4 | 4 | 5 | 3 | 2 |

(continued)

| Sensory evaluation results | | | | | | | | | | | | | |
|---|---|---|---|---|---|---|---|---|---|---|---|---|---|
| Deterioration smell upon heat sterilization | 1 | 3 | 5 | 5 | 5 | 5 | 4 | 4 | 4 | 4 | 5 | 3 | 2 |

As shown in Table 1-2, with regard to test samples, in which "*hine-shu* during preservation" and "deterioration smell upon heat sterilization" were weak, "potassium taste" was not felt, and good results were obtained regarding the "mellowness of flavor after heating," the "full-bodied taste of soy sauce after heating," and the "fresh feeling of citrus after heating," the content of potassium ions was in the range of 0.02% to 5.0% by mass, and the content of sodium ions was in the range of 0.5% to 4.0% by mass (Nos. 2 to 7 and 9 to 12). It is to be noted that the content of p-cymene of each of these test samples was in the range of 0.0006 to 4.0 ppm. In contrast, in the case of a test product (No. 1) in which the content of potassium ions and the content of sodium ions were lower than the above-described range, both "*hine-shu* during preservation" and "deterioration smell upon heat sterilization" were strong, there was no "mellowness of flavor after heating," and the "full-bodied taste of soy sauce after heating" was weak. In addition, in the case of a test product (No. 8) in which the content of potassium ions exceeded the above-described range, "potassium taste" was felt, and in the case of a test sample (Test No. 13) in which the content of sodium ions exceeded the above-described range, "*hine-shu* during preservation" and "deterioration smell upon heat sterilization" were strongly felt. Moreover, *yuzu* juice used as a raw material was preserved at 44°C for 30 days in a hermetically sealed environment having no microorganism contamination, so as to prepare a sample (No. 10) capable of reproducing the degree of deterioration corresponding to preservation at 24°C for 120 days, and the sample (No. 10), as well as a sample (No. 9) in which unpreserved *yuzu* juice was used, were evaluated. As a result, the obtained results were different from the tendency described in Non-Patent Literature 2, and the amount of p-cymene tended to be decreased rather in the *yuzu* juice after preservation at 44°C. The sample No. 10 had lower values than the sample No. 9, in terms of the fresh feeling of citrus at the time of non-heating and the fresh feeling of citrus after heating. However, a significant difference was not found between the two samples, in terms of the advantageous effects of the present invention such as suppression of generation of *hine-shu.* That is to say, citrus juice, which has been subjected to a heat treatment and the like, can be used, as long as individual components in the finally obtained seasoning can have desired values. Furthermore, the tendency of generation of off-flavor during preservation of citrus juice does not correspond to the tendency of generation of *hine-shu* from the *ponzu* soy sauce seasoning defined in the present invention. Accordingly, generation of the two types of odors is assumed to be based on different mechanisms.

(Example 2) Studies regarding content of p-cymene

(1) Preparation of test samples

Individual raw materials were fully mixed with one another according to the prescription shown in Table 2-1 (wherein the contents were changed by addition of p-cymene), and test samples were prepared in the same manner as that of Example 1. Test sample Nos. 14, 15 and 16 are not according to the invention.

[Table 2-1]

| | Test sample | | | | | | |
|---|---|---|---|---|---|---|---|
| | No. 14 | No. 15 | No. 16 | No. 17 | No. 18 | No. 19 | No. 20 |
| Prescription of seasoning (mass part) | | | | | | | |
| Grain vinegar (acidity: 4.2%) | 200 | 200 | 200 | 200 | 200 | 200 | 200 |
| Alcoholic vinegar (acidity: 15%) | 0 | 0 | 0 | 0 | 0 | 0 | 0 |
| *Yuzu* juice | 0 | 0 | 0 | 0 | 0 | 0 | 0 |
| *Yuzu* juice preserved at 44°C for 30 days | 0 | 0 | 0 | 0 | 0 | 0 | 0 |
| *Mikan* juice | 10 | 10 | 10 | 10 | 10 | 10 | 10 |
| Soy sauce | 330 | 330 | 330 | 330 | 330 | 330 | 330 |
| Sodium glutamate | 25 | 25 | 25 | 25 | 25 | 25 | 25 |
| High fructose corn syrup | 100 | 100 | 100 | 100 | 100 | 100 | 100 |
| Table salt | 30 | 30 | 30 | 30 | 30 | 30 | 30 |

(continued)

| | Test sample | | | | | | |
|---|---|---|---|---|---|---|---|
| | No. 14 | No. 15 | No. 16 | No. 17 | No. 18 | No. 19 | No. 20 |
| Prescription of seasoning (mass part) | | | | | | | |
| Potassium chloride | 0 | 0 | 0 | 0 | 0 | 0 | 0 |
| Citric acid | 4 | 4 | 4 | 4 | 4 | 4 | 4 |
| p-Cymene | 0.0000005 | 0.000001 | 0.0005 | 0.001 | 0.0001 | 0.004 | 0.006 |
| Water | Proper quantity | Proper quantity | Proper quantity | Proper quantity | Proper quantity | Proper quantity | Proper quantity |
| Total | 1000 | 1000 | 1000 | 1000 | 1000 | 1000 | 1000 |

(2) Sensory evaluation method

The test samples prepared in the above (1) were subjected to a sensory test in the same manner as that of Example 1, in terms of "potassium taste," the "mellowness of flavor after heating," the "full-bodied taste of soy sauce after heating," the "fresh feeling of citrus after heating/at the time of non-heating," "deterioration smell upon heat sterilization," and "*hine-shu* at the time of non-heating/during preservation," so that the test samples were evaluated in terms of individual test items.

(3) Results

The analysis values of the seasonings and the sensory evaluation results are shown in the following Table 2-2.

[Table 2-2]

| | Test sample | | | | | | |
|---|---|---|---|---|---|---|---|
| | No. 14 | No.15 | No. 16 | No. 17 | No. 18 | No. 19 | No. 20 |
| Analysis values of seasoning | | | | | | | |
| p-Cymene (ppm) | 0.0005 | 0.001 | 0.500 | 1.000 | 0.100 | 4.000 | 6.000 |
| Limonene (ppm) | 3.902 | 3.503 | 4.103 | 4.001 | 3.993 | 4.153 | 3.598 |
| Linalool (ppm) | 1.250 | 1.230 | 1.324 | 1.283 | 1.145 | 1.290 | 1.311 |
| Acetic acid (mass %) | 0.843 | 0.824 | 0.852 | 0.821 | 0.825 | 0.855 | 0.835 |
| Citric acid (mass %) | 0.391 | 0.380 | 0.412 | 0.398 | 0.403 | 0.400 | 0.365 |
| Sodium ions (mass %) | 3.354 | 3.423 | 3.342 | 3.256 | 3.145 | 3.542 | 3.243 |
| Potassium ions (mass %) | 0.183 | 0.179 | 0.184 | 0.198 | 0.169 | 0.190 | 0.204 |
| Soy sauce amount (mass %) | 33.0 | 33.0 | 33.0 | 33.0 | 33.0 | 33.0 | 33.0 |
| Total amount of citrus juice (mass %) | 1.0 | 1.0 | 1.0 | 1.0 | 1.0 | 1.0 | 1.0 |
| K + Na (mass %) | 3.537 | 3.602 | 3.526 | 3.454 | 3.314 | 3.732 | 3.447 |
| K/Na | 0.05 | 0.05 | 0.06 | 0.06 | 0.05 | 0.05 | 0.06 |
| Citric acid/acetic acid | 0.46 | 0.46 | 0.48 | 0.48 | 0.49 | 0.47 | 0.44 |
| pH | 4.00 | 3.97 | 3.949 | 3.983 | 3.85 | 4.09 | 3.81 |
| Dissociated acetic acid (mass %) | 0.1248 | 0.1150 | 0.1140 | 0.1176 | 0.0904 | 0.1506 | 0.0842 |
| Leucine (mass %) | 0.22 | 0.20 | 0.19 | 0.21 | 0.18 | 0.20 | 0.25 |
| Sensory evaluation results | | | | | | | |
| Potassium taste | 5 | 5 | 5 | 5 | 5 | 5 | 5 |

(continued)

| Sensory evaluation results | | | | | | | |
|---|---|---|---|---|---|---|---|
| Mellowness of flavor after heating | 5 | 5 | 5 | 5 | 5 | 4 | 3 |
| Full bodied taste of soy sauce after heating | 4 | 4 | 4 | 4 | 4 | 4 | 4 |
| Fresh feeling of citrus at time of non-heating | 5 | 5 | 5 | 5 | 5 | 4 | 2 |
| Fresh feeling of citrus after heating | 5 | 5 | 5 | 5 | 5 | 4 | 2 |
| *Hine-shu* at time of non-heating | 5 | 5 | 5 | 5 | 5 | 4 | 3 |
| *Hine-shu* during preservation | 2 | 5 | 5 | 5 | 5 | 4 | 3 |
| Deterioration smell upon heat sterilization | 2 | 5 | 5 | 5 | 5 | 4 | 3 |

As shown in Table 2-2, with regard to test samples, in which "*hine-shu* during preservation" and "deterioration smell upon heat sterilization" were weak, "potassium taste" was not felt, and good results were obtained regarding the "mellowness of flavor after heating," the "full-bodied taste of soy sauce after heating," and the "fresh feeling of citrus after heating," the content of p-cymene was in the range of 0.0006 to 4.0 ppm (Nos. 15 to 19). In contrast, in the case of a test product (No. 14) in which the content of p-cymene was lower than the above-described range, both "*hine-shu*" during preservation and "deterioration smell upon heat sterilization" were strong, and in the case of a test product (No. 20) in which the content of p-cymene exceeded the above-described range, the "fresh feeling of citrus at the time of non-heating" and the "fresh feeling of citrus after heating" were weak.

Industrial Applicability

The present invention can be used in the field of the production of a *ponzu* soy sauce seasoning, which can be preserved for a long period of time regardless of the type of a container.

## Claims

1. A *ponzu* soy sauce seasoning comprising citrus juice, vinegar, and soy sauce, wherein the contents of components (a) to (e) in the seasoning are in the following ranges:

   (a) p-cymene: 0.001 to 0.5 ppm,
   (b) potassium ions: 0.02% to 5.0% by mass,
   (c) sodium ions: 0.5% to 4.0% by mass,
   (d) acetic acid: 0.5% to 3.5% by mass, and
   (e) citric acid: 0.2% to 4.5% by mass, and the mass ratio (K/N) between the content of potassium ions and the content of sodium ions is 0.03 to 0.5.

2. The *ponzu* soy sauce seasoning according to claim 1, wherein the total content of potassium ions and sodium ions is 0.5% to 6.0% by mass.

3. The *ponzu* soy sauce seasoning according to claim 1 or 2, wherein the concentration of dissociated acetic acid is 0.002% to 1.0% by mass.

4. The *ponzu* soy sauce seasoning according to any one of claims 1 to 3, wherein the mass ratio (citric acid/acetic acid) between the content of citric acid and the content of acetic acid is 0.2 to 10.0.

5. The *ponzu* soy sauce seasoning according to any one of claims 1 to 4, wherein the content of leucine is 0.03% to 0.5% by mass.

6. The *ponzu* soy sauce seasoning according to any one of claims 1 to 5, which has a pH value of 1.9 to 4.5.

7. A method for suppressing the *hine-shu* of a *ponzu* soy sauce seasoning comprising citrus juice, vinegar, and soy sauce, which comprises adjusting the following components (a) to (e) in the *ponzu* soy sauce seasoning to the

following ranges:

(a) p-cymene: 0.001 to 0.5 ppm,
(b) potassium ions: 0.02% to 5.0% by mass,
(c) sodium ions: 0.5% to 4.0% by mass,
(d) acetic acid: 0.5% to 3.5% by mass, and
(e) citric acid: 0.2% to 4.5% by mass,
wherein the term "*hine-shu*" is used to mean a unique odor generated as a result of the oxidation reaction of components comprised in citrus juice or soy sauce during the preservation of the *ponzu* soy sauce seasoning, this odor being one type of off-flavor, which is different from the deterioration smell of soy sauce alone or the deterioration smell of citrus juice alone, and it is also different from the flavor of p-cymene itself; it is a flavor such as a mixture of the oxidized odor of oil/fat derived from soy sauce and the oxidized odor of oil/fat derived from citrus juice, wherein the two oxidized odors each have different flavor characteristics; it is significantly generated under preservation conditions from normal temperature to high temperature; it is an unpleasant smell generated when maturation has excessively progressed, and it is also considered to be an unfavorable "mature flavor".

**Patentansprüche**

**1.** Ponzu-Sojasauce-Würze, die Zitronensaft, Essig und Sojasauce umfasst, wobei der Gehalt der folgenden Komponenten (a) bis (e) in der Würze in den folgenden Bereichen liegt:

(a) p-Cymol: 0,001 bis 0,5 ppm;
(b) Kaliumionen: 0,02 Massen-% bis 5,0 Massen-%;
(c) Natriumionen: 0,5 Massen-% bis 4,0-Massen-%;
(d) Essigsäure: 0,5 Massen-% bis 3,5 Massen-%; und
(e) Citronensäure: 0,2 Massen-% bis 4,5 Massen-%,

und wobei das Massenverhältnis (K/N) zwischen dem Gehalt der Kaliumionen und dem Gehalt der Natriumionen 0,03 bis 0,5 beträgt.

**2.** Ponzu-Sojasauce-Würze nach Anspruch 1, wobei der Gesamtgehalt der Kaliumionen und Natriumionen 0,5 Massen-% bis 6,0 Massen-% beträgt.

**3.** Ponzu-Sojasauce-Würze nach Anspruch 1 oder 2, wobei die Konzentration von dissoziierter Essigsäure 0,002 Massen-% bis 1,0 Massen-% beträgt.

**4.** Ponzu-Sojasauce-Würze nach einem der Ansprüche 1 bis 3, wobei das Massenverhältnis (Citronensäure/Essigsäure) zwischen dem Gehalt von Citronensäure und dem Gehalt von Essigsäure 0,2 bis 10,0 beträgt.

**5.** Ponzu-Sojasauce-Würze nach einem der Ansprüche 1 bis 4, wobei der Gehalt von Leucin 0,03 Massen-% bis 0,5 Massen-% beträgt.

**6.** Ponzu-Sojasauce-Würze nach einem der Ansprüche 1 bis 5, die einen pH-Wert von 1,9 bis 4,5 aufweist.

**7.** Verfahren zur Unterdrückung des Hine-Shu einer Ponzu-Sojasauce-Würze, die Zitronensaft, Essig und Sojasauce umfasst, welches das Einstellen der folgenden Komponenten (a) bis (e) in der Ponzu-Sojasauce-Würze auf die folgenden Bereiche umfasst:

(a) p-Cymol: 0,001 bis 0,5 ppm,
(b) Kaliumionen: 0,02 Massen-% bis 5,0 Massen-%
(c) Natriumionen: 0,5 Massen-% bis 4,0-Massen-%
(d) Essigsäure: 0,5 Massen-% bis 3,5 Massen-% und
(e) Citronensäure: 0,2 Massen-% bis 4,5 Massen-%,

wobei der Begriff "Hine-Shu" verwendet wird, um einen besonderen Geruch zu beschreiben, der als Ergebnis der Oxidationsreaktion von Komponenten, die in Zitronensaft oder Sojasauce enthalten sind, während der Konservierung

der Ponzu-Sojasauce-Würze erzeugt wird, wobei dieser Geruch eine Art von Geruch nach Verdorbenem ist, der sich von dem Zersetzungsgeruch von Sojasauce alleine und dem Zersetzungsgeruch von Zitronensaft alleine unterscheidet und der sich außerdem von dem Geruch von p-Cymol selbst unterscheidet; wobei der Geruch wie ein Gemisch aus dem Oxidationsgeruch von Öl/Fett, das von der Sojasauce stammt, und dem Oxidationsgeruch von Öl/Fett, das von dem Zitronensaft stammt, anmutet, wobei die beiden Oxidationsgerüche jeweils unterschiedliche Geruchseigenschaften aufweisen; wobei dieser unter Konservierungsbedingungen von normaler Temperatur zu hoher Temperatur signifikant erzeugt wird; er ein unangenehmer Geruch ist, der erzeugt wird, wenn die Reifung stark fortgeschritten ist, und außerdem als unerwünschter "reifer Geruch" gilt.

## Revendications

**1.** Assaisonnement de sauce soja *ponzu* comprenant du jus d'agrume, du vinaigre et de la sauce soja, dans lequel les teneurs en composants (a) à (e) de l'assaisonnement sont dans les plages suivantes :

(a) p-cymène : 0,001 à 0,5 ppm,
(b) ions potassium : 0,02 % à 5,0 % en masse,
(c) ions sodium : 0,5 % à 4,0 % en masse,
(d) acide acétique : 0,5 % à 3,5 % en masse, et
(e) acide citrique : 0,2 % à 4,5 % en masse, et le rapport massique (K/N) entre la teneur en ions potassium et la teneur en ions sodium est de 0,03 à 0,5.

**2.** Assaisonnement de sauce soja *ponzu* selon la revendication 1, dans lequel la teneur totale en ions potassium et en ions sodium est de 0,5 % à 6,0 % en masse.

**3.** Assaisonnement de sauce soja *ponzu* selon la revendication 1 ou 2, dans lequel la concentration en acide acétique dissocié est de 0,002 % à 1,0 % en masse.

**4.** Assaisonnement de sauce soja *ponzu* selon l'une quelconque des revendications 1 à 3, dans lequel le rapport massique (acide citrique/acide acétique) entre la teneur en acide citrique et la teneur en acide acétique est de 0,2 à 10,0.

**5.** Assaisonnement de sauce soja *ponzu* selon l'une quelconque des revendications 1 à 4, dans lequel la teneur en leucine est de 0,03 % à 0,5 % en masse.

**6.** Assaisonnement de sauce soja *ponzu* selon l'une quelconque des revendications 1 à 5, qui a un pH de 1,9 à 4,5.

**7.** Procédé pour une suppression de *hine-shu* d'un assaisonnement de sauce soja *ponzu* comprenant du jus d'agrumes, du vinaigre et de la sauce soja, qui comprend un ajustement des composants (a) à (e) suivants dans l'assaisonnement de sauce soja *ponzu* aux plages suivantes :

(a) p-cymène : 0,001 à 0,5 ppm,
(b) ions potassium : 0,02 % à 5,0 % en masse,
(c) ions sodium : 0,5 % à 4,0 % en masse,
(d) acide acétique : 0,5 % à 3,5 % en masse, et
(e) acide citrique : 0,2 % à 4,5 % en masse,

dans lequel le terme « *hine-shu* » est utilisé pour désigner une odeur unique générée à la suite de la réaction d'oxydation de composants compris dans le jus d'agrumes ou la sauce soja pendant la conservation de l'assaisonnement de sauce soja *ponzu,* cette odeur étant un type d'arrière-goût, qui est différent de l'odeur de détérioration de la sauce soja seule ou de l'odeur de détérioration du jus d'agrumes seul, et elle est également différente de l'arôme du p-cymène lui-même ; il s'agit d'un arôme tel qu'un mélange de l'odeur oxydée d'huile/matière grasse dérivée de la sauce soja et de l'odeur oxydée d'huile/matière grasse dérivée du jus d'agrumes, dans lequel les deux odeurs oxydées ont chacune des caractéristiques d'arôme différentes ; elle est générée de manière significative dans des conditions de conservation allant d'une température normale à une température élevée ; c'est une odeur désagréable générée lorsque la maturation a connu une progression trop importante, et elle est également considérée comme un « arôme mature » défavorable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014147366 A
- US 3294550 A
- JP 2004049104 A
- JP 2009142194 A
- JP 2014083032 A


### Non-patent literature cited in the description


- **TOUNSI, MOUFIDA SAIDANI et al.** Juice Components And Antioxidant Capacity Of Four Tunisian Citrus Varieties. *Journal Of The Science Of Food And Agriculture,* 2010, vol. 91 (1), 142-151
- Research Report. Toyo College of Food Technology & Toyo Institute of Food Technology, 2009, vol. 27, 65-69
- Research Report. Toyo College of Food Technology & Toyo Institute of Food Technology, 1996, vol. 21, 91-104
- *CHEMICAL ABSTRACTS,* 99-87-6
- Gyokai no Doko, ''Shomikigen Encho'' Gijyutsu no Kangaekata (Industry Trends, Concept of ''Best-Before Date Extension'' Technique). JAS Information, 2011, vol. 503, 2-5